# EUROPEAN PATENT APPLICATION

(11) **EP 1 980 159 A1**
(43) Date of publication of application: **15.10.2008**
(21) Application number: 06834756.6
(22) Date of filing: 15.12.2006
(51) Int. Cl.: A23L 1/10, C12C 1/16

(54) **METHOD FOR REDUCING INTRAORAL IRRITANTS OF SPROUTED GRAIN**

(30) Priority: 19.12.2005 JP 2005365628
(71) Applicant: SUNTORY LIMITED, Osaka-shi, Osaka 530-8203 (JP)
(72) Inventor: KAGEYAMA, Norihiko, Mishima-gun, Osaka, 618-8503 (JP); NAKAHARA, Koichi, Mishima-gun, Osaka, 618-0001 (JP)
(74) Representative: Vossius & Partner
(86) International application number: PCT/JP2006/325013
(87) International publication number: WO 2007/072747

(57) **Abstract**

A method for reducing oral cavity stimulating substance of a sprouted grain such as malt, in which oral cavity stimulating substance contained in a sprouted grain is hydrolyzed, removed by adsorption, degraded by an enzyme, or removed by separation, whereby the content thereof is reduced.

## Description

### TECHNICAL FIELD

The present invention relates to a method for reducing oral cavity stimulating substance (intraoral irritants) of sprouted grain.

### BACKGROUND ART

Examples of sprouted grain are sprouted brown rice, wheat, barley, soybeans, corn, and the like. These are widely used as the starting material for many beverage and food products. In particular, there are many alcoholic beverages and food products whose starting material is malt. Examples include brewed alcoholic beverages, such as beer and happoshu(low-malt beer), distilled liquors such as whiskey, and confectioneries such as roasted rice snacks. Such beverage and food products often have astringency, which is a type of oral cavity stimulation. Astringency is a taste that is unpleasant to the consumer such that there is a bitter taste when eating or drinking or a burning sensation on the tongue and throat after eating or drinking.

When an astringent substance remains in the mouth, it numbs the sense of taste slightly. As a result, there is a chance that a person will be incapable of tasting a food or beverage and appetite will be diminished. For instance, the astringency of a beer beverage is related to flavor when the beer is inside the mouth, how smoothly the beer is swallowed, and aftertaste, but when a beer beverage having a high astringent substance content is consumed in large quantities, the flavor of the beer, how smoothly the beer is swallowed, and the aftertaste deteriorate during drinking, and the appetite for the beer is diminished. On the other hand, if the astringent substances could be reduced, it would be possible to produce a beer beverage that has a more refreshing flavor, is more smoothly swallowed, and has a better aftertaste.

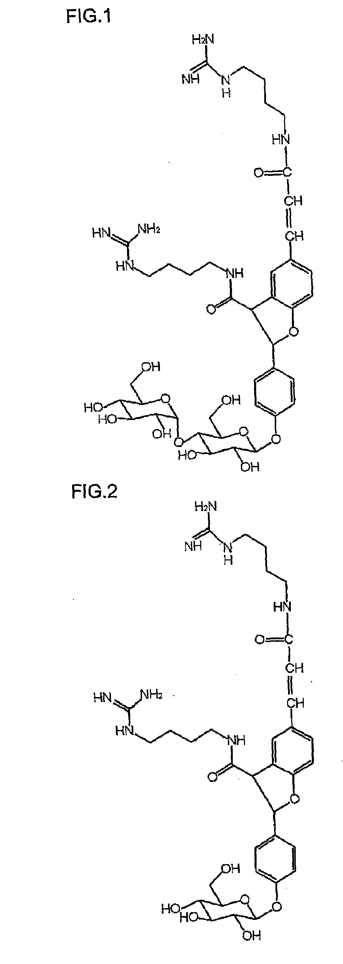

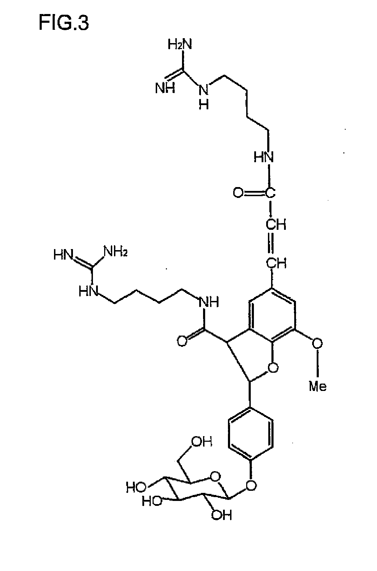

Through intense research the inventors ascertained that oral cavity stimulating substance that become the source of the oral cavity stimulation referred to as astringency are contained in a sprouted grain such as malt, and identified the chemical formula of these stimulating substance (refer to FIGS. 1 through 3). With malt, for example, they discovered that the part referred to as the germ has a particularly high oral cavity stimulating substance.
Consequently, in order to reduce the oral cavity stimulation such as astringency of a beverage or foodstuff whose starting material is a sprouted grain, the sprouted grain is used after the part having a particularly high oral cavity stimulating substance has been removed; e.g., the germ in the case of malt (for instance, refer to Patent Reference 1).
Patent Reference 1: International Disclosure No. 2004/106483 Pamphlet

### DISCLOSURE OF THE INVENTION

### Problems That the Invention Is Intended to Solve

The above-mentioned method poses a problem in regard to the vast amount of time and labor to remove the part having a large amount of oral cavity stimulating substance from a sprouted grain, resulting in a considerable increase in cost, such as labor cost.

The present invention was devised in light of the above-mentioned circumstances, and provides a method allowing the oral cavity stimulating substance of a sprouted grain to be removed using a simple treatment procedure.

### Means for Solving the Problems

According to a first aspect of the present invention for accomplishing the above-mentioned object, there is provided a method for reducing oral cavity stimulating substance of a sprouted grain, wherein oral cavity stimulating substance contained in a sprouted grain are hydrolyzed, whereby the content thereof is reduced.

### [Action and Effect]

Hydrolyzing the oral cavity stimulating substance contained in a sprouted grain and reducing the content thereof makes it possible to reduce oral cavity stimulation of foods and beverages in which the sprouted grain is used as a starting material. As a result, it is possible to prevent a consumer from experiencing a numbed sense of taste or losing their appetite.

Furthermore, according to the present invention, the part of the sprouted grain having a large amount of oral cavity stimulating substance; e.g., the germ in the case of malt, does not need to be removed in advance, and the sprouted grain can be treated intact. Therefore, treatment is simple, time and labor are saved, and there is less chance of a large increase in labor cost or other costs.
It is also possible to control the extent of the reduction in oral cavity stimulating substance and adjust the oral cavity stimulating substance of the sprouted grain as needed by adjusting the hydrolysis treatment conditions such as the treatment time. Therefore, it is possible to produce from the same type of sprouted grain a variety of foods and beverages having various degrees of oral cavity stimulation, and to quickly respond to the preferences of present-day consumers, whose tastes are more diverse.

The phrase "oral cavity stimulation" denotes irritation that affects primarily the throat and tongue in the form of astringency, bitterness, sweetness, numbness, a medicinal sensation, a satisfying taste, or the like. The phrase " oral cavity stimulating substance " denotes a substance that is the source of the oral cavity stimulation in question, and examples are the compounds in FIGS. 1 through 3 as identified by the inventors.

According to a second aspect of the present invention there is provided a method for reducing oral cavity stimulating substance of a sprouted grain, wherein oral cavity stimulating substance in a sprouted grain are removed by adsorption, whereby the content thereof is reduced.

### [Action and Effect]

Adsorbing and removing the oral cavity stimulating substance contained in a sprouted grain and reducing the content thereof makes it possible to reduce oral cavity stimulation of foods and beverages in which the sprouted grain is used as a starting material. As a result, it is possible to prevent a consumer from experiencing a numbed sense of taste or losing their appetite.

Furthermore, according to the present invention, the part of the sprouted grain having a large oral cavity stimulating substance; e.g., the germ in the case of malt, does not need to be removed in advance, and the sprouted grain can be treated intact. Therefore, treatment is simple, time and labor are saved, and there is less chance of a large increase in labor cost or other costs.
Moreover, it is possible to control the extent of the reduction in oral cavity stimulating substance and adjust the oral cavity stimulating substance of the sprouted grain as needed by adjusting the removal by adsorption conditions, such as selection of the carrier for adsorbing the oral cavity stimulating substance. Therefore, it is possible to produce from the same type of sprouted grain a variety of foods and beverages having various degrees of oral cavity stimulation, and to quickly respond to the preferences of present-day consumers, whose tastes are more diverse.

According to a third aspect of the present invention there is provided a method for reducing oral cavity stimulating substance of a sprouted grain, wherein oral cavity stimulating substance in a sprouted grain are degraded using an enzyme, whereby the content thereof is reduced.

### [Action and Effect]

Using an enzyme to degrade the oral cavity stimulating substance contained in a sprouted grain and reduce the content thereof makes it possible to reduce the oral cavity stimulating substance of food and beverage products in which the sprouted grain is used as a starting material. As a result, it is possible to prevent a consumer from experiencing a numbed sense of taste or losing their appetite.

Furthermore, according to the present invention, the part of the sprouted grain having a large oral cavity stimulating substance; e.g., the germ in the case of malt, does not need to be removed in advance, and the sprouted grain can be treated intact. Therefore, treatment is simple, time and labor are saved, and there is less chance of a large increase in labor cost or other costs.
Moreover, it is possible to control the extent of the reduction in oral cavity stimulating substance and adjust the oral cavity stimulating substance of the sprouted grain as needed by adjusting the enzyme degradation conditions, such as selection of various enzymes and treatment time. Therefore, it is possible to produce from the same type of sprouted grain a variety of foods and beverages having various degrees of oral cavity stimulation, and to quickly respond to the preferences of present-day consumers, whose tastes are more diverse.

According to a fourth aspect of the present invention there is provided a method for reducing oral cavity stimulating substance of a sprouted grain, wherein oral cavity stimulating substance in a sprouted grain are removed by separation, whereby the content thereof is reduced.

### [Action and Effect]

By removing the oral cavity stimulating substance contained in a sprouted grain by separation, thereby reducing the content thereof, it is possible to reduce the oral cavity stimulating substance of food and beverage products whose starting material is this sprouted grain. As a result, it is possible to prevent a consumer from experiencing a numbed sense of taste or losing their appetite.

Furthermore, according to the present invention, the part of the sprouted grain having a large oral cavity stimulating substance; e.g., the germ in the case of malt, does not need to be removed in advance, and the sprouted grain can be treated intact. Therefore, treatment is simple, time and labor are saved, and there is less chance of a large increase in labor cost or other costs.
Moreover, it is possible to control the extent of the reduction in oral cavity stimulating substance and adjust the oral cavity stimulating substance of the sprouted grain as needed by adjusting the removal by separation conditions, such as selection of various separation membranes and extraction solvents. Therefore, it is possible to produce from the same type of sprouted grain a variety of foods and beverages having various degrees of oral cavity stimulation, and to quickly respond to the preferences of present-day consumers, whose tastes are more diverse.

According to a fifth aspect of the present invention, the above-mentioned oral cavity stimulating substance are hydrolyzed using an acid.

### [Action and Effect]

According to the present configuration, it is possible to readily hydrolyze the oral cavity stimulating substance using an inorganic acid, such as hydrochloric acid or sulfuric acid, or an organic acid such as acetic acid, which are readily available on the general market.

According to a sixth aspect of the present invention, the above-mentioned acid is selected from the group consisting of hydrochloric acid, sulfuric acid, phosphoric acid, and acetic acid.

### [Action and Effect]

Hydrochloric acid, sulfuric acid, phosphoric acid, and acetic acid are readily available on the general market.

According to a seventh aspect of the present invention, the above-mentioned acid-assisted hydrolysis is performed at a pH of 0.1 to 3.0.

### [Action and Effect]

Acid-assisted hydrolysis is performed at a pH of 0.1 to 3.0. Therefore, the oral cavity stimulating substance can be hydrolyzed in a more reliable manner. On the other hand, when the pH is lower than 0.1 or higher than 3.0, hydrolysis either does not occur, or takes a very long time when it does occur. In order to have a definite degradation speed and ensure the properties of the treated product, a pH range of 0.1 to 3.0 is preferred.

According to an eighth aspect of the present invention, the above-mentioned oral cavity stimulating substance are hydrolyzed using an alkali.

### [Action and Effect]

According to the present configuration, it is possible to hydrolyze the oral cavity stimulating substance by using an alkali such as sodium hydroxide, which is readily available on the general market.

According to a ninth aspect of the present invention, the above-mentioned alkali is selected from the group consisting of sodium hydroxide, potassium hydroxide, and calcium hydroxide.

### [Action and Effect]

Sodium hydroxide, potassium hydroxide, and calcium hydroxide are readily available on the general market.

According to a tenth aspect of the present invention, the above-mentioned alkali-assisted hydrolysis is performed at a pH of 11 to 13.9.

### [Action and Effect]

When alkali-assisted hydrolysis is performed at a pH of 11 to 13.9, the oral cavity stimulating substance can be hydrolyzed in a more reliable manner. On the other hand, when pH is lower than 11 or higher than 13.9, hydrolysis either does not occur, or takes a very long time if it does occur. In order to have a definite degradation speed and ensure the properties of the treated product, a pH range of 11 to 13.9 is preferred.

According to an eleventh aspect of the present invention, the above-mentioned oral cavity stimulating substance are hydrolyzed using a high-temperature, high-pressure fluid.

### [Action and Effect]

According to the present configuration, a high-temperature, high-pressure fluid quickly permeates the sprouted grain under the associated pressure, and the oral cavity stimulating substance in a sprouted grain can be more reliably hydrolyzed by the high heat energy of the fluid. It is thereby possible to reduce the oral cavity stimulating substance in the sprouted grain reliably and in a short amount of time.

According to a twelfth aspect of the present invention, the above-mentioned fluid temperature is 120 to 220°C.

### [Action and Effect]

The fluid temperature is 120 to 220°C; therefore, it is possible to degrade the oral cavity stimulating substance in the sprouted grain reliably and in a shorter amount of time without reducing the commercial value of the sprouted grain.
On the other hand, a fluid temperature lower than 120°C is inappropriate because there is a chance that degradation of the oral cavity stimulating substance will be insufficient, while a fluid temperature higher than 220°C is inappropriate because there is a chance that there will be a considerable reduction in the commercial value of the sprouted grain, such as the presence of a burnt smell, which would have a detrimental effect on the flavor and aroma of the sprouted brain.

According to a thirteenth aspect of the present invention, the above-mentioned fluid pressure expressed as the gauge pressure is 0.1 MPa to 2.2 MPa.

### [Action and Effect]

According to the present configuration, it is possible to degrade the oral cavity stimulating substance reliably and in a shorter amount of time, and thereby reduce the content thereof in the sprouted grain without reducing the commercial value of the sprouted grain.
On the other hand, a fluid pressure lower than 0.1 MPa is inappropriate because there is a chance that degradation of the oral cavity stimulating substance will be insufficient, while a fluid temperature higher than 2.2 MPa is inappropriate because there is a chance that there will be a considerable reduction in the commercial value of the sprouted grain, such as the generation of a burnt smell, which would have a detrimental effect on the flavor and aroma of the sprouted brain.

According to a fourteenth aspect of the present invention, the above-mentioned fluid temperature is 120 to 220°C, and the above-mentioned fluid pressure expressed as the gauge pressure is 0.1 to 2.2 MPa.

### [Action and Effect]

According to the present configuration, it is possible to degrade the oral cavity stimulating substance reliably and in a further shorter amount of time, and thereby reduce the content thereof in the sprouted grain without reducing the commercial value of the sprouted grain.
On the other hand, a fluid temperature lower than 120°C or a fluid pressure lower than 0.1 MPa is inappropriate because there is a chance that degradation of the oral cavity stimulating substance will be insufficient. Moreover, a fluid temperature higher than 220°C or a fluid pressure higher than 2.2 MPa is inappropriate because there is a chance that there will be a considerable reduction in the commercial value of the sprouted grain, such as the generation of a burnt smell, which would have a detrimental effect on the flavor and aroma of the sprouted brain.

According to a fifteenth aspect of the present invention, the above-mentioned fluid temperature is 140 to 200°C and the above-mentioned fluid pressure expressed as the gauge pressure is 0.2 to 1.4 MPa.

### [Action and Effect]

According to the present configuration, it is possible to degrade the oral cavity stimulating substance reliably and in a further shorter amount of time, and thereby reduce the content thereof in the sprouted grain without reducing the commercial value of the sprouted grain. Furthermore, when malt, for instance, is treated as the sprouted grain, the growth of the malt stops and the shelf life improves, as with of the normal roasting process. Moreover, the malt takes on a freshly cut aroma such that it has a unique delicious roasted aroma and the components and the golden to brown color needed for beer beverages.

According to a sixteenth aspect of the present invention, the above-mentioned fluid is a fluid containing at least either water or an organic solvent.

### [Action and Effect]

According to the present configuration, the fluid is a fluid containing at least either water or an organic solvent; therefore, it is possible to use, for instance, water containing a water-soluble organic solvent or inorganic solvent, such as distilled water, desalinated water, tap water, an organic solvent, or an alcohol.

According to a seventeenth aspect of the present invention, the above-mentioned fluid is water.

### [Action and Effect]

According to the present configuration, the fluid is water; therefore, distilled water, desalinated water, tap water, and the like can be used.

According to an eighteenth aspect of the present invention, the above-mentioned water is water vapor.

### [Action and Effect]

According to the present configuration, the water is water vapor; therefore, the oral cavity stimulating substance in the sprouted grain can be hydrolyzed quickly and reliably.

According to a nineteenth aspect of the present invention, the above-mentioned water vapor is saturated water vapor.

### [Action and Effect]

According to the present configuration, the water vapor is saturated water vapor; therefore, the oral cavity stimulating substance in the sprouted grain can be hydrolyzed quickly and reliably.

According to a twentieth aspect of the present invention, the removal by adsorption is performed using a resin or activated carbon.

### [Action and Effect]

According to the present configuration, the removal by adsorption can be efficiently performed using a resin or activated carbon. Moreover, it is possible to readily adjust the oral cavity stimulating substance in the sprouted grain.

According to a twenty-first aspect of the present invention, the above-mentioned resin is at least one resin selected from the group consisting of adsorption resins, ion-exchange resins, gel filtration resins, and affinity chromatography carriers.

### [Action and Effect]

Adsorption resins, ion-exchange resins, gel filtration resins, and affinity chromatography carriers are readily available on the general market.

According to a twenty-second aspect of the present invention, the above-mentioned enzyme is β-glucosidase or β-glycosidase.

### [Action and Effect]

According to the present configuration, it is possible to degrade the oral cavity stimulating substance having β-glycoside bonds using β-glucosidase or β-glycosidase.

According to a twenty-third aspect of the present invention, the above-mentioned removal by separation is performed using a separation membrane.

### [Action and Effect]

It is possible to filter a suspension of a crushed sprouted grain suspended in water, e.g., using a separation membrane having pores through which the oral cavity stimulating substance can pass, and causing the oral cavity stimulating substance to move to the filtrate, whereby the oral cavity stimulating substance contained in the sprouted grain can be removed by separation. The reverse can also be applied; e.g., the above-mentioned suspension can be filtered using a separation membrane having pores through which the oral cavity stimulating substance cannot pass, and the substances other than oral cavity stimulating substance can be caused to move to the filtrate, whereby the oral cavity stimulating substance contained in the sprouted grain can be removed by separation.

According to a twenty-fourth aspect of the present invention, the separation membrane is a dialysis membrane or critical filtration membrane.

### [Action and Effect]

A dialysis membrane or critical filtration membrane is readily available on the general market.

According to a twenty-fifth aspect of the present invention, the removal by separation is performed using cold water.

### [Action and Effect]

For instance, steeping an intact sprouted grain in cold water and causing the oral cavity stimulating substance to elute into the cold water makes it possible to remove by separation the oral cavity stimulating substance contained in the sprouted grain without activating the various enzymes contained in the sprouted grain.

According to a twenty-sixth aspect of the present invention, the oral cavity stimulating substance are astringent substances.

### [Action and Effect]

An stringent substance is a one that imparts an unpleasant sensation to the consumer such that there is a bitter taste when eating or drinking or a burning sensation on the tongue and throat after eating or drinking.
Removing the astringent substances contained in a sprouted grain by hydrolysis, adsorption, enzyme degradation or separation (generally referred to as "reduction treatments" hereafter), thereby reducing the content thereof, it is possible to reduce the astringency of food and beverage products whose starting material is this sprouted grain. As a result, it is possible to prevent a consumer from experiencing a numbed sense of taste or losing their appetite.

Furthermore, according to the present invention, the part of the sprouted grain having a large astringent content does not need to be removed in advance, and the sprouted grain can be treated intact. Therefore, treatment is simple, time and labor are saved, and there is less chance of a large increase in labor cost or other costs.
Moreover, it is possible to control the extent of the reduction in the astringent substance and adjust the astringent substance content of the sprouted grain as needed by adjusting treatment time or other conditions of the above-mentioned reduction treatments. Therefore, it is possible to produce from the same type of sprouted grain a variety of foods and beverages having various degrees of oral cavity stimulation, and to quickly respond to the preferences of present-day consumers for an increasing diversity of flavors and aromas.

According to a twenty-seventh aspect of the present invention, there is provided a method for processing sprouted grain comprising a step for reducing the oral cavity stimulating substance of a sprouted grain using one or an arbitrary combination of the reduction methods according to any of above-mentioned 1st through 26^{th} aspects.

### [Action and Effect]

According to the present configuration, it is possible to produce a variety of processed products, such as crushed or dry products, of a sprouted grain whose oral cavity stimulating substance have been reduced.

According to a twenty-eighth aspect of the present invention, the reduction method cited in any one of above-mentioned 17 through 19 aspects is a method for processing a sprouted grain comprising a step for promoting transpiration of moisture and swelling by low-pressure exposure of the sprouted grain treated using a high-temperature, high-pressure fluid.

### [Action and Effect]

According to the present configuration, transpiration of moisture and swelling are promoted; therefore, the sprouted grain swells, becomes porous, increases in surface area, and tends to dissolve in liquids, which is beneficial to subsequent processing treatments.

According to a twenty-ninth aspect of the present invention, an extruder is used.

### [Action and Effect]

An extruder makes it possible to continuously perform hydrolysis of the oral cavity stimulating substance of a sprouted grain using a high-temperature, high-pressure fluid while simultaneously performing other processing treatments, such as crushing and mixing; therefore, it is possible to dramatically improve the efficiency with which food and beverage products and the like are produced using a sprouted grain processed product as the starting material.

According to a thirtieth aspect of the present invention, there is provided a sprouted grain processed product, which is obtained by the method for processing a sprouted grain according to any one of the 27^{th} through 29^{th} aspects.

### [Action and Effect]

The oral cavity stimulating substance are reduced in the sprouted grain processed product of the present invention; therefore, it is possible to produce a beverage or food that does not numb the sensation of taste or diminish appetite by using as the starting material the sprouted grain processed product of the present invention.

According to a thirty-first aspect of the present invention, there is provided a food or beverage product produced using the sprouted grain processed product according to the 30^{th} aspect as a starting material.

### [Action and Effect]

The food or beverage product of the present invention is produced using as the starting material a sprouted grain processed product in which the oral cavity stimulating substance have been reduced; therefore, even if the product is consumed in large quantities, there will be little numbing of the sensation of taste or a reduction in appetite.

According to a thirty-second aspect of the present invention, the sprouted grain is malt.

### [Action and Effect]

Food and beverage products, such as beer beverages, produced using as the starting material malt having a reduced oral cavity stimulating substance have an improved flavor, are smoother when swallowed, have an improved aftertaste, and are more stable in terms of quality, when compared to beer beverages product from malt whose oral cavity stimulating substance has not been reduced.

### BRIEF DESCRIPTION OF THE DRAWINGS

FIG. 1 is the chemical formula of oral cavity stimulating substance 1 (cisor trans related to -CH=CH-).
FIG. 2 is the chemical formula of oral cavity stimulating substance 2 (*cis* or *trans* related to -CH=CH-).
FIG. 3 is the chemical formula of oral cavity stimulating substance 3 (*cis* or *trans* related to -CH=CH-, Me is a methyl group).

### BEST MODE FOR CARRYING OUT THE INVENTION

Modes of the present invention will now be described.

### [First Mode]

### (Sprouted grain)

Examples of the a sprouted grain that can be used in the present are sprouted barley, wheat, rye, wild oats, oats, adlay, and other such malted grains; rice; corn; Japanese millet; Italian millet; common millet; buckwheat; soy; adzuki beans; peas; broad beans; kidney beans; and the like. Malt (barley) and sprouted whole grain rice (rice) are preferred. However, there are no special restrictions to the sprouted grain as long as it contains at least one of the three types of oral cavity stimulating substance identified by the inventors (refer to FIGS. 1 through 3).

The term "sprouted grain" in the present invention includes the whole sprouted grain and fraction such as the albumen, germ, husk, and the like, as well as treated products of the whole sprouted grain or fraction thereof. There are no special restrictions to the treated product as long as it is a whole sprouted grain or fraction thereof that has been subjected to some type of treatment, such as crushing, pulverization, grinding, drying, extraction, or suspension, or any combination of these treatments.

Examples are the whole sprouted grain or fraction thereof, such as the crushed, pulverized, ground, dried, or freeze-dried whole sprouted grain or fraction thereof; the extract, extraction liquid, or solid after extraction (residue) obtained by extraction (including supercritical extraction) using an appropriate solvent of the whole sprouted grain or fraction thereof, or the crushed, pulverized, ground, dried, or freeze-dried product thereof; and the suspension (suspension liquid) or concentrate thereof (concentrated liquid) obtained by suspending in an appropriate solvent the whole sprouted grain or fraction thereof or the crushed, pulverized, ground, dried, or freeze-dried product thereof.

(1) Mode wherein oral cavity stimulating substance contained in a sprouted grain are hydrolyzed using a high-temperature, high-pressure fluid, whereby the content thereof is reduced.
According to the present mode, the above-mentioned sprouted grain is treated by a high-temperature, high-pressure fluid and the oral cavity stimulating substance in the sprouted grain are hydrolyzed (this processing treatment is referred to as "high-temperature, high-pressure treatment" hereafter).

There are no special limits to the fluid (liquid) used in high-temperature, high-pressure treatment, and examples include water containing water-soluble organic compounds and inorganic salts, such as distilled water, desalinated water, tap water, alkaline ionized water, deep layer sea water, deionized water, deoxygenated water, and alcohol.

Vapor; i.e., water vapor and alcohol vapor, of the above-mentioned liquids are examples of the fluid (gas) used in the high-temperature, high-pressure treatment.
In addition to the above-mentioned fluids, supercritical fluids and subcritical fluids are included among the fluids used for the high-temperature, high-pressure treatment. When a certain pressure and temperature (critical points) are exceeded, the boundary between gas and liquid disappears, and a fluid state is maintained of the gas and fluid being present in a harmonious whole. Such a fluid is called a supercritical fluid, and is a high-density fluid having properties somewhere between those of a gas and a liquid. A subcritical fluid is a fluid in a state of a lower pressure and temperature than the critical point.

The fluid temperature during high-temperature, high-pressure treatment is preferably approximately 120 to 220°. Approximately 140 to 200°C is more preferable. Within this temperature range, degradation of the astringent substances in the sprouted grain is sufficiently promoted, there is a further increase in the aromatic component and the aroma improves, and there is little incidence of oxidation by high-temperature, high-pressure treatment or the burnt smell and the like that accompany oxidation.

The pressure of the fluid during high-temperature, high-pressure treatment is preferably approximately 0.1 to 2.2 MPa, and more preferably approximately 0.2 to 1.4 MPa. Saturated water vapor pressure is particularly preferred for high-temperature, high water vapor pressure treatment. The term "pressure" in the present invention denotes "gauge pressure." Consequently, when, for instance, "a pressure of 0.1 MPa" is converted to absolute pressure, it becomes a pressure obtained by adding 0.1 MPa to atmospheric pressure. When the pressure is within this range, it is possible to more efficiently degrade the astringent components in the sprouted grain.

Treatment time is preferably approximately 1 second to 60 minutes, and more preferably approximately 3 seconds to 30 minutes. Approximately 5 seconds to 10 minutes is particularly preferred. When temperature is within this range, it is possible to further reduce the amount of energy consumed and it has the effect of raising the facility operating ratio.

There are no special restrictions to the device used for high-temperature, high-pressure treatment, and any device can be used as long as it has a structure that is resistant to high temperatures and high pressures. An example of this device is a device that is a combination of a pressure-resistant reactor and a heating device. According to this device, the liquid or gas is heated by a heater to become a liquid or gas in a high-temperature, high-pressure state and is sent to the reactor.
Any heating device that is capable of heating can be used. There are no special restrictions, and examples are electric, oil, coal, or gas heating, solar heating, and geothermal heating.
Moreover, the above-mentioned device can be a simple heat-resistant, pressure-resistant pipe. The reactor can be a pipe that is made of a pressure and heat-resistant material, but it is preferable to avoid materials having metal and other components that melt, give off toxic substances, or produce an offensive odor. There are no particular limits to the above-mentioned material, but a material such as stainless steel is preferred in order to avoid unnecessary reactions and corrosion, degradation, and the like.

According to the present mode, it is also possible to perform a conventional processing treatment before, after or at the same time as the high-temperature, high-pressure treatment. There are no particular restrictions to the conventional processing treatment, and examples are crushing, mixing, extraction (including supercritical extraction), and drying (vacuum drying, and the like).

For instance, when left alone after the high-temperature, high-pressure treatment, the starches in the sprouted grain turn to paste, the paste solidifies on cooling, and it becomes necessary to spend energy on the crushing process. Therefore, it is preferred that a drying step for facilitating crushing be added after the high-temperature, high-pressure treatment in order to obtain a processed product that is easy to handle. One such method is the method whereby after the high-temperature, high-pressure treatment, the pressure is quickly reduced in order to cause the water content to disperse in a short amount of time, resulting in rapid drying. According to this method, the texture becomes sponge-like with a sudden reduction in pressure and it is possible to solve the problem of hardening of conventional drying. This drying process also facilitates subsequent dissolution and crushing. By actively adding this drying step, it becomes possible to obtain a fluid-treated product in a form that is more easily used in the following steps when compared to natural drying.

Moreover, it is also possible to mold the fluid treated product into any shape during the drying step by extrusion or exfiltration means or any combination with cutting means. The shape can be changed as desired into a stick shape, cylindrical shape, spherical, columnar polygonal shape, polygonal shape, and the like. Moreover, it is also possible to manipulate the water content of the finished product at this time.

In addition, when the sprouted grain is crushed and this crushed product is subjected to high-temperature, high-pressure treatment, or when the sprouted grain is simultaneously subjected to high-temperature, high-pressure treatment and crushed, the sprouted grain can be subjected to a more uniform high-temperature, high-pressure treatment, and the molding of the product subjected to the high-temperature, high-pressure treatment can be more easily accomplished. When a mixing step is added in addition to a crushing step, it is possible to uniformly mix the crushed sprouted grain.

An extruder is an example of a device capable of efficiently performing the present mode. An extruder is a treatment device that is often used to produce puffed food products, and the like. Specifically, the transporting, mixing, crushing, and shearing function produced by the turning of a screw can be used to perform the following processing treatment continuously while the high-temperature, high pressure treatment (heating and pressurization) of the sprouted grain is performed. Consequently, using this device, it is possible to very efficiently perform not only the high-temperature, high-pressure treatment of the sprouted grain, but also any other processing treatment, and because a continuous treatment is possible, large amounts of sprouted grain finished product can be produced. As a result, it is possible to dramatically increase the efficiency of producing food and beverage products whose starting materials are such sprouted grain processed products.

An example of a preferred extruder for the present mode is a device that heats and pressurizes the sprouted grain while mixing using one, two, or another number of screws disposed inside the extrusion barrel, and extrudes the sprouted grain in a high-temperature, high-pressure state from a die. A twin-screw extruder is preferred because stable high-temperature, high-pressure treatment is possible.
Moreover, when an extruder is used and the treatment atmosphere is suddenly released from high pressure to low pressure after the high-temperature, high-pressure treatment, the water content of the treated product (a sprouted grain) transpires and the product puffs out; therefore, the treated product becomes porous, surface area is increased, the product can be easily dissolved in a liquid such as water, and subsequent processing treatment is facilitated. Moreover, a treated product molded into any shape can be obtained by selecting the appropriate die shape. In addition, it is possible to use a device other than an extruder as long as it is a device capable of performing the present mode.

The sprouted grain processed product treated in the present embodiment can be used as a starting material for a food or beverage product, for instance. In other words, the high-temperature, high-pressure treatment imparts a pleasant aroma (roasted aroma) to the sprouted grain processed product treated in the present embodiment and reduces the oral cavity stimulating substance such as astringent substances; therefore, the consumer will not encountering a numbing of their sense of taste their appetite for food and beverages will not be diminished. Furthermore, it is possible to obtain a high-quality starting material wherein the reduction in oral cavity stimulation corresponds to an improvement in the body and flavor of the sprouted grain.
Although there are no restrictions to the food and beverage products; examples include alcoholic beverages, juices, coffee, tea, malt beverages, and other refreshing beverages; confectioneries; breads; flours; noodles; rice; processed foods; and condiments.

(2) Mode wherein the oral cavity stimulating substance of a sprouted grain are hydrolyzed using an acid, whereby the content thereof is reduced
According to the present mode, the above-mentioned sprouted grain is treated using an acid and the oral cavity stimulating substance in the sprouted grain are hydrolyzed (this processing treatment is referred to as "acid treatment" hereafter).

The acid treatment can be performed as needed by, for instance, bringing the solid (preferably crushed) sprouted grain into contact with an acidic liquid, or adding an acid to a suspension of the sprouted grain (preferably crushed) suspended in water, and the like, or an extract of the sprouted grain (preferably crushed), and the like.

Examples of the acid used for acid treatment are hydrochloric acid, sulfuric acid, phosphoric acid, and acetic acid. There are no special restrictions to whether the acid is organic or inorganic as long as it provides the hydrogen ion concentration needed to catalyze hydrolysis. Nevertheless, sulfuric acid is preferred in light of the fact that the present invention is used as a food or beverage.

There are no particular restrictions to the pH of the acid treatment as long as it is a level at which the oral cavity stimulating substance will decompose; however, in order to have a definite degradation speed and ensure the properties of the treated product, a pH within a range of 0.1 to 3.0 is preferred.

There are no particular restrictions to the treatment temperature as long as it is a temperature at which the oral cavity stimulating substance will hydrolyze, but a treatment temperature from 4 to 100°C is preferred.

According to the present mode, it is also possible to perform a conventional processing treatment before, after or at the same time as the acid treatment. There are no particular restrictions to the conventional processing treatment. Examples include crushing, mixing, extraction (including supercritical extraction), and drying (vacuum drying, and the like). It is preferred that treatment such as neutralization with an alkaline reagent and the like be performed once the acid treatment is finished.

The sprouted grain processed product treated by the present embodiment can be used as a starting material for a food or beverage product, for instance. In other words, there is a reduction in the oral cavity stimulating substance such as astringent substances contained in the sprouted grain processed product treated by the present mode; therefore, it is possible to prevent a consumer from experiencing a numbed sense of taste or losing their appetite. Furthermore, it is possible to obtain a high-quality starting material wherein the reduction in oral cavity stimulation corresponds to an improvement in the body and flavor of the sprouted grain.
Although there are no restrictions to the food and beverage products, examples are alcoholic beverages, juices, coffee, tea, malt beverages, and other refreshing beverages; confectioneries; breads; flours; noodles; rice; processed foods; and condiments.

(3) Mode wherein the oral cavity stimulating substance of a sprouted grain are hydrolyzed using an alkali, whereby the content thereof is reduced
According to the present mode, the above-mentioned sprouted grain is treated using an alkali and the oral cavity stimulating substance in the sprouted grain are hydrolyzed (this processing treatment is referred to as "alkali treatment" hereafter).

Alkali treatment can be performed arbitrarily by, for instance, bringing the solid (preferably crushed) sprouted grain into contact with an alkaline liquid, or adding an alkali to a suspension of the sprouted grain (preferably crushed) suspended in water, and the like, or an extract of the sprouted grain (preferably crushed), and the like.

Examples of the alkali used for alkali treatment are sodium hydroxide, potassium hydroxide, and calcium hydroxide, and there are no particular restrictions as long as the alkali is one that provides the hydroxide ion concentration necessary to catalyze hydrolysis. Nevertheless, sodium hydroxide is preferred in light of the fact that the present invention will be used for food and beverages.

There are no particular restrictions to the pH of the alkali treatment as long as it is a level at which the oral cavity stimulating substance will decompose. However, in order to have a definite degradation speed and ensure the properties of the treated product, a pH within a range of 11 to 13.9 is preferred.

There are no particular restrictions to the treatment temperature when alkali treatment is performed as long as it is a temperature at which the oral cavity stimulating substance will hydrolyze, but a treatment temperature from 4 to 100°C is preferred.

According to the present mode, it is also possible to perform a conventional processing treatment before, after or at the same time as the alkali treatment. There are no particular restrictions to the conventional processing treatment, and examples are crushing, mixing, extraction (including supercritical extraction), and drying (vacuum drying, and the like). It is preferred that treatment such as neutralization with an acidic reagent, and the like be performed once the alkali treatment is finished.

The sprouted grain processed product treated by the present embodiment can be used as a starting material for a food or beverage product, for instance. In other words, there is a reduction in the oral cavity stimulating substance such as astringent substances contained in the sprouted grain processed product treated by the present mode; therefore, it is possible to prevent a consumer from experiencing a numbed sense of taste or losing their appetite. Furthermore, it is possible to obtain a high-quality starting material wherein the reduction in oral cavity stimulation corresponds to an improvement in the body and flavor of the sprouted grain.
Although there are no restrictions to the food and beverage products; examples include alcoholic beverages, juice, coffee, tea, malt beverages, and other refreshing beverages; confectioneries; breads; flours; noodles; rice; processed foods; and condiments.

### [Second Mode]

According to the present mode, the oral cavity stimulating substance in the sprouted grain are removed by adsorption (this process is referred to as "adsorption treatment" hereafter).

Removal by adsorption refers to treatment with a substance for adsorbing the oral cavity stimulating substance, wherein the oral cavity stimulating substance are removed by being adsorbed or dissolved due to their affinity with this substance.
In this case, the sprouted grain can be used intact; it can be used after being pre-crushed using a commercial mill; or it can be used as a suspension of sprouted grain (preferably crushed) suspended in water and the like, or an extract obtained by extracting the sprouted grain (preferably crushed).

There are no special restrictions to the substance used to adsorb the oral cavity stimulating substance. For instance, it is possible to use a solid substance such as a resin, a liquid substance such as water or ethanol, or a gaseous substance such as a supercritical or subcritical fluid.

For instance, when using a liquid substance for removal, the crushed sprouted grain is immersed in a liquid such as water, ethanol, or a water/ethanol mixture; the oral cavity stimulating substance are removed together with the liquid; and the residue is used as a food or beverage or a starting material.
Cold water is particularly preferred as the liquid substance. In this case, it is important that the water be brought to a temperature that will not activate the amylase, or other enzymes contained in the sprouted grain. For instance, the temperature of the cold water is preferably 0 to 30°C. Once the oral cavity stimulating substance have been removed using a liquid substance, it is possible to further finely crush the residue, and re-extract the active ingredients and the like with warm water or another liquid and the like, and use this extract.

When using a solid substance for removal, for instance, it is possible to use a treatment whereby a suspension obtained by suspending the sprouted grain (preferably crushed) in water and the like or an extract of the sprouted grain (preferably crushed) and the like is treated by being brought into contact with a resin or activated carbon.

Examples of the resin used for adsorption treatment are adsorption resins, ion exchange resins, gel filtration resins, and affinity chromatography carriers, but there are no special restrictions as long as it is a resin capable of removing the oral cavity stimulating substance by adsorption. Examples of this adsorbing resin are resins wherein a variety of alkyl chains (C₂₋₁₈) have been chemically bonded to the surface of silica gel, which can be used for reverse-phase chromatography, and resins wherein amino groups or cyano groups have been chemically bonded to the surface of silica gel, which can be used for normal phase chromatography.

Moreover, the substance used to adsorb the oral cavity stimulating substance can be particles or a membrane, and it can be further processed such that it can be applied to piping, such as a stainless steel tube or pipe.
Nevertheless, in light of the fact that after adsorption treatment, the sprouted grain processed product will be used as the starting material for food and beverages, it is preferred that no resin component or the like be mixed in the treated liquid or the like as a result of adsorption.

According to the present mode, it is also possible to perform a conventional processing treatment before, after or at the same time as the adsorption treatment. There are no particular restrictions to the conventional processing treatment, and examples are crushing, mixing, extraction (including supercritical extraction), and drying (vacuum drying, and the like). For instance, taking into consideration the fact that the after the above-mentioned adsorption treatment, the processed a sprouted grain will be used as the starting material for food and beverages, it is possible to add a step for removing the resin residue using filtration or another process after adsorption with a resin or the like, or a step for adjusting pH and the like after treatment.
Although it is preferred that adsorption be performed at the optimal temperature and pH based on the resin that is used, as long as the temperature and pH are such that the oral cavity stimulating substance can be removed by adsorption, there are no particular restrictions to the treatment conditions when adsorption is performed. However, 4 to 100°C and a pH from 1 to 13 are preferable.

The sprouted grain processed product treated by the present embodiment can be used as a starting material for a food or beverage product, for instance. In other words, there is a reduction in the oral cavity stimulating substance such as astringent substances contained in the sprouted grain processed product treated by the present mode; therefore, it is possible to prevent a consumer from experiencing a numbed sense of taste or losing their appetite. Furthermore, it is possible to obtain a high-quality starting material wherein the reduction in oral cavity stimulation corresponds to an improvement in the body and flavor of the sprouted grain.
Although there are no restrictions to the food and beverage products, examples include alcoholic beverages, juice, coffee, tea, malt beverages, and other refreshing beverages; confectioneries; breads; flours; noodles; rice; processed foods; and condiments.

### [Third Mode]

According to the present mode, the oral cavity stimulating substance in the sprouted grain are hydrolyzed by enzyme treatment of the sprouted grain (this treatment is referred to as "enzyme treatment" hereafter).

Enzyme treatment can be performed by adding an appropriate enzyme to a suspension obtained by suspending the sprouted grain (preferably crushed) in water, and the like or an extract of the sprouted grain (preferably crushed), and the like, in order to induce an enzyme reaction (hydrolysis).

Examples of the enzymes used for enzyme treatment are β-glucosidase and β-glycosidase. The oral cavity stimulating substance having β-glycoside bonds can be decomposed by these enzymes. There are no special restrictions to this enzyme as long as it is capable of enzyme decomposition of the corresponding oral cavity stimulating substance.
On the other hand, in light of the fact that after enzyme treatment, the sprouted grain processed product will be used as a starting material for food and beverages, it is preferred that the enzyme be derived from the same plant or that the enzyme be one derived from another species of plant or one that is derived from an animal, and the like.

Moreover, for the same reason it is preferred that it be possible to easily deactivate the enzyme, or easily separate and remove the enzyme and the like after enzyme treatment, but there are no particular restrictions to how this is accomplished. The optimal temperature and optimal pH of the enzyme that is used are preferred as the treatment conditions when enzyme treatment is performed. However, there are no particular restrictions as long as the temperature and pH are those at which the oral cavity stimulating substance can be decomposed. 4 to 100°C and a pH of from 1 to 13 are preferred.

According to the present mode, it is also possible to perform a conventional processing treatment before, after or at the same time as the enzyme treatment. There are no particular restrictions to the conventional processing treatment, and examples are crushing, mixing, extraction (including supercritical extraction), and drying (vacuum drying, and the like).

The sprouted grain processed product treated in the present embodiment can be used as a starting material for a food or beverage product, for instance. In other words, there is a reduction in the oral cavity stimulating substance such as astringent substances contained in the sprouted grain processed product treated by the present mode; therefore, it is possible to prevent a consumer from experiencing a numbed sense of taste or losing their appetite. Furthermore, it is possible to obtain a high-quality starting material wherein the reduction in oral cavity stimulation corresponds to an improvement in the body and flavor of the sprouted grain.
There are no restrictions to the food and beverage products; examples include alcoholic beverages, juice, coffee, tea, malt beverages, and other refreshing beverages; confectioneries; breads; flours; noodles; rice; processed foods; and condiments.

### (Fourth Mode)

(1) Mode wherein the oral cavity stimulating substance of a sprouted grain are removed by separation using a separation membrane, whereby the content thereof is reduced
According to the present embodiment, the oral cavity stimulating substance in a sprouted grain are removed by separation using a separation membrane having fine pores, such as a dialysis membrane or critical filtration membrane (this processing treatment is referred to as "membrane separation" hereafter).

Membrane separation treatment is preferably used with a suspension obtained by suspending the sprouted grain (preferably crushed) in water, and the like, an extract of the sprouted grain (preferably crushed), and the like.
A dialysis membrane used in protein purification and the like is an example of the separation membrane having fine pores, but there are no particular restrictions as long as the membrane is capable of removing the oral cavity stimulating substance by separation. Moreover, the membrane is not necessarily a thin membrane. For instance, a microlattice grid, a ceramic membrane, and a membrane having an unglazed pottery finish are all separation membranes, but the present invention is not limited to these particular examples.

The optimal temperature and optimal pH of the enzyme that is used are preferred as the treatment conditions when enzyme treatment is performed. However, there are no particular restrictions as long as the temperature and pH are those at which the oral cavity stimulating substance can be decomposed. 4 to 100°C and a pH of from 1 to 13 are preferred.

According to the present mode, it is also possible to perform a conventional processing treatment before, after or at the same time as the membrane separation. There are no particular restrictions to the conventional processing treatment, and examples are crushing, mixing, extraction (including supercritical extraction), and drying (vacuum drying, and the like).

The sprouted grain processed product treated in the present embodiment can be used as a starting material for a food or beverage product, for instance. In other words, there is a reduction in the oral cavity stimulating substance such as astringent substances contained in the sprouted grain processed product treated by the present mode; therefore, it is possible to prevent a consumer from experiencing a numbed sense of taste or losing their appetite. Furthermore, it is possible to obtain a high-quality starting material wherein the reduction in oral cavity stimulation corresponds to an improvement in the body and flavor of the sprouted grain.
Although there are no restrictions to the food and beverage products, examples include alcoholic beverages, juice, coffee, tea, malt beverages, and other refreshing beverages; confectioneries; breads; flours; noodles; rice; processed foods; and condiments.

(2) Mode wherein oral cavity stimulating substance of a sprouted grain are removed by separation using a suitable amount of cold water, whereby the content thereof is reduced
According to the present mode, oral cavity stimulating substance in the sprouted grain are removed by separation using cold water (this processing treatment referred to as "cold water separation" hereafter).

Cold water separation can be performed as needed by, for instance, bringing the solid form of the sprouted grain (preferably crushed) into contact with cold water (by steeping in cold water, and the like).
Although there are no limits to the water that can be used as the cold water, examples are distilled water, desalinated water, tap water, alkali ionized water, deep layer sea water, deionized water, and deoxygenated water. A mixture with another liquid, such as alcohol, can also be used.

According to the present mode, it is also possible to perform a conventional processing treatment before, after or at the same time as the cold water separation. There are no particular restrictions to the conventional processing treatment, and examples are crushing, mixing, extraction (including supercritical extraction), and drying (vacuum drying, and the like). For instance, it is possible to add a drying step by freeze drying, spray drying, and the like after cold water separation. There are no particular restrictions to the cold water temperature and cold water pH can be any temperature and pH such that the oral cavity stimulating substance can be separated, but it is preferred that cold water separation be performed at 0 to 30°C and a pH of 1 to 13.

The sprouted grain processed product treated by the present embodiment can be used as a starting material for a food or beverage product, for instance. In other words, there is a reduction in the oral cavity stimulating substance such as astringent substances contained in the sprouted grain processed product treated by the present mode; therefore, it is possible to prevent a consumer from experiencing a numbed sense of taste or losing their appetite. Furthermore, it is possible to obtain a high-quality starting material wherein the reduction in oral cavity stimulation corresponds to an improvement in the body and flavor of the sprouted grain.
Although there are no restrictions to the food and beverage products, examples include alcoholic beverages, juice, coffee, tea, malt beverages, and other refreshing beverages; confectioneries; breads; flours; noodles; rice; processed foods; and condiments.

### Working Examples

### Working Example 1: Method for quantitative determination of oral cavity stimulating substance in malt

According to the present working example, the following method was used to quantitatively determine the oral cavity stimulating substance in beer, happoshu, or wort.

1 mL of beer, happoshu, or wort was passed through a filter having a pore size of 0.45 µm (Millipore) and 10 µL was subjected to HPLC analysis. Analysis was performed using a Deverosil-C30-UG5 (Nomura Chemical Co., Ltd., 4.6 × 150 mm) column with the HPLC system CLASS-VP series (Shimadzu Corporation). The analysis conditions were 0.05% TFA (trifluoroacetic acid) aqueous solution as solution A, 0.05% TFA/90% acetonitrile solution as solution B, a linear gradient for 100 minutes from 0% to 20% of solution B at a current velocity of 1.0 mL/min. Detection was performed using UV absorption at a wavelength of 300 nm.

According to this measurement method, the inventors discovered that oral cavity stimulating substance 1 through 3 shown in FIGS. 1 through 3 are each detected as single peaks by HPLC analysis. Therefore, in the working examples that follow, the reduction in the oral cavity stimulating substance was evaluated by calculating the percentage of the peak area of a sample after treatment versus the peak area of the sample before treatment as the peak area ratio (%) (peak area ratio (%) = peak area of sample after treatment/peak area of sample before treatment × 100). It is clear that the peak area ratio (%) shows good correlation with the degree of reduction in oral cavity stimulating substance.

### Working Example 2: High-temperature, high-pressure treatment of malt

A high-temperature moist heat-treatment test device (Hisaka Works, Ltd.: HTS-25/140-8039) and steam boiler (Miura Co., Ltd.: FH-100) were used for the high-temperature, high-pressure treatment. 1.0 kg of European two-row barley malt was introduced to an SUS316 alloy 12 L basket and the basket was sealed inside an SUS316 alloy heat-resistant, pressure-resistant vessel (30 L). The air inside the vessel was purged by introducing, for approximately one second, high-temperature, high-pressure saturated steam generated using water (oxygen concentration of 0.3 µg/mL) that had been deoxygenated using a deoxygenator (Miura Co., Ltd., DOR-1000P), and then a high-temperature, high-pressure state was maintained at 180°C and 0.9 MPa for 60 seconds. When the reaction vessel reached 80°C or lower after degassing, the vessel was opened, the malt was removed, the liquid was air dried for an entire day and night, and processed malt (sample 1) of the present invention was obtained.

The inventors prepared untreated European two-row barley malt and a paste obtained by shelf drying (120°C, 5 hours) 1.0 kg of European two-row barley malt presuming a roasting step during the conventional process for producing melanoidine barley (comparative example). The peak areas of the oral cavity stimulating substance contained in sample 1, comparative example and the untreated barley were measured according to the method in Working Example 1. The results are shown in the following table 1.
The results in Table 1 confirm that the oral cavity stimulating substance were reduced to 1/5 by subjecting malt to the high-temperature, high-pressure treatment of the present invention.

**[Table 1]**

| | Untreated malt | Comparative example | Sample 1 |
|---|---|---|---|
| Peak area ratio of oral cavity stimulating substance (%) | 100 | 98.0 | 21.9 |

### Working Example 3: Effect of temperature during high-temperature, high-pressure treatment

A high-temperature, high-pressure reactor made by AKICO Corporation was used for high-temperature, high-pressure treatment. Forty grams of water (oxygen concentration of 0.3 µg/mL) that had been deoxygenated by a deoxygenator (Miura Co., Ltd., DOR-1000P) was introduced to an SUS316 alloy heat-resistant, pressure-resistant vessel (400 mL), 0.5 g of malt was introduced to an SUS316 alloy 200 mL basket, and the basket was disposed such that it did not contact water.

The air inside the vessel was purged by introducing nitrogen for approximately five seconds and then the high-temperature, high-pressure state was maintained for 60 seconds under the temperature conditions shown in Table 2, from 120 to 220°C. The vessel was cooled and opened when the reactor reached 80°C or lower, and the malt was removed. The peak area of the oral cavity stimulating substance contained in the resulting malt was determined in accordance with the determination method of Working Example 1.
Sensory tests were also performed on the resulting malt. The evaluations involved evaluation of the degree of astringency in three points by a 10-member panel and comparison of the average. The aroma of the malt was also evaluated. Table 2 shows these results.

**[Table 2]**

| Treatment temperature (°C) | Peak area ratio of oral cavity stimulating substance (%) | Sensory test | Aroma |
|---|---|---|---|
| Untreated | 100.0 | 3 | Faint roasted aroma |
| 120 | 57.0 | 1.1 | Faint roasted aroma |
| 140 | 43.0 | 0.8 | Faint roasted aroma |
| 180 | 25.4 | 0.5 | Strong roasted aroma |
| 190 | 22.8 | 0.5 | Strong roasted aroma |
| 200 | 11.4 | 0.3 | Strong roasted aroma |
| 210 | 7.9 | 0.1 | Sour smell |
| 220 | 7.0 | 0.1 | Burnt aroma |

### Working Example 4: Production of happoshu using high-temperature, high-pressure treated malt

Happoshu was produced using as the starting material high-temperature, high-pressure treated malt (malt processed product). Happoshu was obtained using the high-temperature, high-pressure treated malt (200°C, 1.4 MPa) obtained by the method according to Working Example 2 as 2.5% of the total amount of the starting material minus the water (simply referred to as the starting material used hereafter).

Specifically, 3 kg of high-temperature, high-pressure malt (200°C, 1.4 MPa) was mixed with 27 kg of malt and saccharification was performed for approximately one hour using 150 L of water at 65°C. The saccharification liquid was filtered. The saccharified starch was added and stirred such that the malt percentage was 25%. Approximately 100 g of hops was introduced and the mixture was boiled for approximately one hour at 100°C. After cooling to 12°C, approximately 300 g of yeast for brewing beer was added, the product was fermented at 12°C for two weeks, and happoshu (product 1 of the present invention) was obtained.
Moreover, happoshu that used untreated malt as the starting material used (control 1) and happoshu wherein melanoidine malt was used as 10% of the starting material used (control 2) were similarly made. As a result of performing sensory tests, product 1 of the present invention had good aroma and flavor with little astringency when compared to control 1 and control 2.

### Working Example 5: Production of beer using high-temperature, high-pressure treated malt

Beer was produced using high-temperature, high-pressure treated malt (malt processed product) as the starting material.
Beer was obtained using the high-temperature, high-pressure treated malt (140°C, 0.2 MPa) obtained in accordance with Working Example 2 as 50% of the starting material used.

Specifically, 15 kg of high-temperature, high-pressure treated malt (140°C, 0.2 MPA) was mixed with 15 kg of malt and saccharification was performed for approximately one hour using 150 L of water at 65°C. After the saccharification liquid had been filtered, approximately 100 g of hops was introduced and the mixture was boiled for approximately one hour at 100°C. After cooling to 12°C, approximately 300 g of yeast for brewing beer was added, fermentation was performed at 12°C for two weeks, and beer (product 2 of the present invention) was obtained.
Moreover, beer that used untreated malt as the starting material used was similarly produced as the control (control 3). As a result of performing sensory tests, product 2 of the present invention had a good flavor and aroma with little astringency when compared to control 3.

### Working Example 6 Example of producing malt processed product using an extruder (twin-screw extruder)

European two-row malt was subjected to high-temperature, high-pressure treatment under conditions of a temperature of 200°C and a pressure of 0.2 MPa for 30 seconds using an extruder (twin-screw extruder: The Japan Steel Works, Ltd. TEX30F) and a malt processed product was obtained.
This malt processed product could be easily dissolved in water (including warm water, and the like) without further crushing, and the like; the malt could be continuously treated; and a malt processed product was efficiently obtained.

This extruder can be used for simultaneous high-temperature, high-pressure treatment and crushing, molding, and drying. The sprouted grain processed product obtained by treatment using the extruder therefore did not require further processing treatment, such as a drying step or crushing step; could be easily dissolved in water (including warm water, and the like) without further treatment; and had the effect of being a very convenient starting material for alcoholic beverages and food products.

### Working Example 7: Production of happoshu using malt processed product obtained by using an extruder (twin-screw extruder)

The malt processed product obtained in Working Example 6 was used for 2.5% of the total starting material used minus the water (simply referred to as starting material used hereafter).

Specifically, 3 kg of the high-temperature, high-pressure treated malt obtained in Working Example 6 was mixed with 27 kg of malt and saccharification was performed for approximately one hour using 150 L of water at 65°C. After the saccharification liquid had been filtered, the saccharified starch was added and stirred such that the malt percentage was brought to 25%, approximately 100 g of hops was introduced, and the mixture was boiled for approximately one hour at 100°C. After cooling to 12°C, approximately 300 g of yeast for brewing beer was added, fermentation was performed at 12°C for two weeks, and happoshu (product 3 of the present invention) was obtained.
Happoshu (control 4) in which malt was used as the starting material was similarly prepared as the control by way of a comparative example. As a result of sensory tests, product 3 of the present invention had a good aroma and flavor with little astringency when compared to control 4.

### Working Example 8: Production of happoshu using malt processed product obtained by using an extruder (twin-screw extruder)

A happoshu was obtained using the malt processed product obtained in Working Example 6, using 12.5% of all of the starting materials except water ("starting materials" below).

Specifically, 15 kg of the high-temperature, high-pressure treated malt obtained in Working Example 6 was mixed with 15 kg of malt and saccharification was performed for approximately one hour using 150 L of water at 65°C. After the saccharification liquid was filtered, the saccharified starch was added and stirred such that the malt percentage was brought to 25%, approximately 100 g of hops was introduced, and the mixture was boiled for approximately one hour at 100°C. After cooling to 12°C, approximately 300 g of yeast for brewing beer was added, fermentation was performed at 12°C for two weeks, and happoshu (product 4 of the present invention) was obtained.
Happoshu (control 5) in which malt was used as the starting material was similarly prepared as a control by way of a comparative example. As a result of sensory tests, product 4 had a good aroma and flavor with little astringency when compared to control 5.

### Working Example 9: Reduction in oral cavity stimulating substance by water separation

Malt was used as the sprouted grain and the oral cavity stimulating substance in the malt were reduced.
100 mL of cold water at 10°C was added to 40 g of crushed malt (European two-row), the mixture was slowly stirred for 20 minutes while being maintained at 10°C, and the solid component was recovered.
Meanwhile, malt that had not been subjected to water separation was used as a control. The oral cavity stimulating substance in these samples were quantitatively measured by the following method.
That is, 160 mL of warm water at 65°C were added to a sample, the sample was kept at 65°C for 30 min, and centrifugation (7000 rpm, 10 minutes) was performed. One milliliter of the supernatant was sampled and the oral cavity stimulating substance were quantitatively determined by the method according to Working Example 1. The peak area ratio (%) was 68.7 when calculated based on these quantitative determination results and the results of quantitative determination of oral cavity stimulating substance obtained from untreated solution that had not been pre-treated using cold water.

### Working Example 10: Reduction in oral cavity stimulating substance by acid treatment

The oral cavity stimulating substance of malt were reduced by hydrolysis using hydrochloric acid.
40 g of malt germ was dissolved in 160 mL of water and maintained at 65°C for 30 minutes. The extract was centrifuged and the supernatant was introduced to Sep-Pak C18 resin (Waters Corporation, Sep-Pak Vac 20 cc C18 cartridge), rinsed using 20 mL of water, and eluted using 20 mL of 20% ethanol.

The eluted fraction was concentrated using an evaporator and freeze dried to obtain the crude fraction powder. Fractionation was repeated using the Gilson, Inc. HPLC system with this 20% ethanol elution fraction (dry weight of 90.4 mg) serving as the crude fraction astringent component.
The column was the Deverosil-C30-UG5 (Nomura Chemical Co., Ltd., 10 × 250 mm), and the analysis conditions were 0.05% TFA (trifluoroacetic acid) aqueous solution as solution A, 0.05% TFA/90% acetonitrile solution as solution B, a linear gradient for 150 minutes from 0% to 50% of solution B at a current velocity of 3 mL/min.

Detection was performed by UV absorption at a wavelength of 300 nm. Each peak was fractionated, aroma and flavor evaluation was performed on each peak, the highly astringent components were identified, and an astringent component powder (oral cavity stimulating substance) was obtained (dry weight of 61.2 mg).

One milligram of this astringent component powder was dissolved in 1 mL of aqueous 1 M hydrochloric acid solution and treated for five minutes at 90°C. The oral cavity stimulating substance were then quantitatively determined by the quantitative determination method shown in Working Example 1. The peak area ratio (%) was less than 1 when calculated based on these quantitative determination results and the results of quantitative determination of the oral cavity stimulating substance obtained from the control that had not been hydrolyzed by hydrochloric acid.

### Working Example 11: Reduction in oral cavity stimulating substance by enzyme treatment

Oral cavity stimulating substance were reduced by enzyme treatment.
0.1 mg of astringent component powder obtained by the method shown in Working Example 9 was dissolved in 1 mL of 0.1 M aqueous sodium acetate solution (pH of 5.0). 10 µL of an enzyme solution of 1 mg of β-glycosidase powder derived from *Penicillium* multicolor (Amano Enzyme Inc.) dissolved in 1 mL of aqueous 0.1 M sodium acetate solution (pH of 5.0) was added to this aqueous solution and maintained at 45°C for two hours.
The mixture was immersed for 30 seconds in a boiling water bath and immediately transferred to over ice. This treated solution was subjected to quantitative determination of oral cavity stimulating substance by the method shown in Working Example 1. The peak area ratio (%) was 0.7 when calculated based on these quantitative determination results and the results of quantitative determination of oral cavity stimulating substance obtained from untreated solution to which the enzyme had not been added.

### Working Example 12: Production of beer wherein oral cavity stimulating substance were reduced by enzyme treatment

Beer in which oral cavity stimulating substance were reduced was produced using the enzyme used in Working Example 11.

Specifically, 150 L of water at 50°C was added to 30 kg of crushed European two-row barley and 100 mg of the above-mentioned β-glycosidase powder were added and stirred for 30 minutes. The temperature was then raised to 65°C and saccharification was performed for approximately one hour. After the saccharification liquid had been filtered, approximately 100 g of hops was introduced, and the mixture was boiled for approximately one hour at 100°C. After cooling to 12°C, approximately 300 g of yeast for brewing beer was added, fermentation was performed at 12°C for two weeks, and beer (product 5 of the present invention) was obtained.
Beer (control 6) that was produced without performing the above-mentioned enzyme treatment was prepared in the same way as the control.

As a result of sensory tests, product 5 had much better aroma and flavor with little astringency in comparison to control 6. Moreover, the oral cavity stimulating substance of the beer of product 5 of the present invention were quantitatively determined by the quantitative determination method shown in Working Example 1. The peak area ratio (%) was less than 1 when calculated based on these quantitative determination results and the results of quantitative determination of the oral cavity stimulating substance obtained from the beer of control 6.

### Working Example 13: Reduction in oral cavity stimulating substance by removal via adsorption (using activated carbon)

The oral cavity stimulating substance in wort were reduced via removal by activated carbon-assisted adsorption.
160 mL of water was added to 40 g of crushed malt (European two-row), 0.5 g of activated carbon Shirasagi New Gold (Takeda Kirin Foods Corporation) was added, and the mixture was treated at 65°C for 30 minutes while stirring. After centrifugation (7000 rpm, ten minutes), the supernatant was recovered and the oral cavity stimulating substance were quantitatively determined by the quantitative determination method in Working Example 1. The peak area ratio (%) was 90.1 when calculated based on these quantitative determination results and the results of quantitative determination of oral cavity stimulating substance obtained from untreated wort to which activated carbon had not been added.

### Working Example 14: Reduction in oral cavity stimulating substance by removal via adsorption (using a resin)

This is an example wherein the oral cavity stimulating substance in wort were reduced via removal by adsorption using a resin.
160 mL of water was added to 40 g of crushed malt (European two-row) and the mixture was treated at 65°C for 30 minutes. Then 10 g of Cosmosil 75C18-OPN resin (Nacalai Tesque, Inc.) was added to the mixture and the product was set aside for 20 minutes at room temperature while stirring. After centrifugation (7000 rpm, 10 minutes), the supernatant was recovered and the oral cavity stimulating substance were quantitatively determined by the quantitative determination method in Working Example 1. The peak area ratio (%) was 65.1 when calculated based on these quantitative determination results and the results of quantitative determination of oral cavity stimulating substance obtained from untreated wort to which resin had not been added.

Working Example 15: Production of beer wherein oral cavity stimulating substance were reduced by removal via adsorption Beer was produced using wort treated by the method according to Working Example 14

Specifically, 5 L of water at 65°C was added to 1 kg of crushed malt (European two-row) and saccharification was performed for 60 minutes. After the saccharification liquid was filtered, approximately three grams of hops was added and the mixture was boiled at 100°C for approximately one hour. The mixture was cooled to 12°C, then 200 g of Cosmosil 75C18-OPN resin (Nacalai Tesque, Inc.) was added and the product was set aside at 12°C for 20 minutes under stirring. Then stirring was stopped, the product was set aside for another 20 minutes, the supernatant was filtered, approximately 10 g of yeast for brewing beer was added to the filtrate, the mixture was fermented at 12°C for two weeks, and beer (product 6) was obtained.
As the control, beer was similarly produced without performing the above-mentioned resin treatment (control 7).

As a result of sensory tests, product 6 of the present invention had a good aroma and flavor with very little astringency when compared to control 7. Moreover, when the oral cavity stimulating substance were quantitatively determined by the quantitative determination method shown in Working Example 1, the peak area ratio (%) was 60.8 as calculated based on the quantitative determination results of product 6 of the present invention and control 7.

### Working Example 15: Reduction in oral cavity stimulating substance by membrane separation

Oral cavity stimulating substance in wort were removed by membrane separation, and a beverage was produced.
160 mL of water was added to 40 g of crushed malt (European two-row) and the mixture was treated at 65°C for 30 minutes. After centrifugation (7000 rpm, ten minutes), the supernatant was recovered and wort was obtained. Critical filtration of the resulting wort was performed using the 3000 NMWL membrane (Millipore). Then the liquid that did not pass through the membrane was recovered and the oral cavity stimulating substance were quantitatively determined by the quantitative determination method shown in Working Example 1. The peak area ratio (%) was 45.3 when calculated based on these quantitative determination results and the results of quantitative determination of oral cavity stimulating substance obtained from treatment liquid that was not subjected to membrane separation.

The above-mentioned procedure whereby wort wherein oral cavity stimulating substance were reduced was repeated three times to obtain approximately 400 mL of wort in which oral cavity stimulating substance were reduced. 600 mg of commercial saccharified starch and a small amount of amino acid mixture were added to the product while stirring and pH was adjusted to 4.5. Water at approximately 80°C was added to bring the total volume to 2 L. Then 2 g of hops was added and a treatment was performed at 100°C for 60 minutes. After cooling to 10°C, 10 g of yeast for brewing beer was added, the product was fermented for five days at 10°C, and a beer-like beverage (happoshu: product 7 of the present invention) was produced wherein the oral cavity stimulating substance were reduced. This beverage was easy to drink and had little astringency or oral cavity stimulating substance.

### INDUSTRIAL APPLICABILITY

The present invention can be used with methods for reducing oral cavity stimulating substance contained in sprouted grains.

## Claims

1. A method for reducing oral cavity stimulating substance of a sprouted grain, wherein oral cavity stimulating substance contained in a sprouted grain are hydrolyzed, whereby the content thereof is reduced.

2. A method for reducing oral cavity stimulating substance of a sprouted grain, wherein oral cavity stimulating substance in a sprouted gain are removed by adsorption, whereby the content thereof is reduced.

3. A method for reducing oral cavity stimulating substance of a sprouted grain, wherein oral cavity stimulating substance in a sprouted grain are degraded by an enzyme, whereby the content thereof is reduced.

4. A method for reducing oral cavity stimulating substance of a sprouted grain, wherein oral cavity stimulating substance in a sprouted grain are removed by separation, whereby the content thereof is reduced.

5. The method for reducing oral cavity stimulating substance of a sprouted grain according to claim 1, wherein the oral cavity stimulating substance are hydrolyzed using an acid.

6. The method for reducing oral cavity stimulating substance of a sprouted grain according to claim 5, wherein the acid is selected from the group consisting of hydrochloric acid, sulfuric acid, phosphoric acid, and acetic acid.

7. The method for reducing oral cavity stimulating substance of a sprouted grain according to either one of claims 5 and 6, wherein the acid-assisted hydrolysis is performed at a pH of 0.1 to 3.0.

8. The method for reducing oral cavity stimulating substance of a sprouted grain according to claim 1, wherein the oral cavity stimulating substance are hydrolyzed using an alkali.

9. The method for reducing oral cavity stimulating substance of a sprouted grain according to claim 8, wherein the alkali is selected from the group consisting of sodium hydroxide, potassium hydroxide, and calcium hydroxide.

10. The method for reducing oral cavity stimulating substance of a sprouted grain according to either one of claims 8 and 9, wherein the alkali-assisted hydrolysis is performed at a pH of 11 to 13.9.

11. The method for reducing oral cavity stimulating substance of a sprouted grain according to claim 1, wherein the oral cavity stimulating substance are hydrolyzed using a high-temperature, high-pressure fluid.

12. The method for reducing oral cavity stimulating substance of a sprouted grain according to claim 11, wherein the fluid temperature is 120 to 220°C.

13. The method for reducing oral cavity stimulating substance of a sprouted grain according to claim 11, wherein the fluid pressure expressed as the gauge pressure is 0.1 MPa to 2.2 MPa.

14. The method for reducing oral cavity stimulating substance of a sprouted grain according to claim 11, wherein the fluid temperature is 120 to 220°C and the fluid pressure expressed as the gauge pressure is 0.1 to 2.2 MPa.

15. The method for reducing oral cavity stimulating substance of a sprouted grain according to claim 14, wherein the fluid temperature is 140 to 200°C and the fluid pressure expressed as the gauge pressure is 0.2 to 1.4 MPa.

16. The method for reducing oral cavity stimulating substance of a sprouted grain according to any one of claims 11 through 15, wherein the fluid is a fluid containing at least either water or an organic solvent.

17. The method for reducing oral cavity stimulating substance of a sprouted grain according to claim 16, wherein the fluid is water.

18. The method for reducing oral cavity stimulating substance of a sprouted grain according to claim 17, wherein the water is water vapor.

19. The method for reducing oral cavity stimulating substance of a sprouted grain according to claim 18, wherein the water vapor is saturated water vapor.

20. The method for reducing oral cavity stimulating substance of a sprouted grain according to claim 2, wherein the removal by adsorption is performed using a resin or activated carbon.

21. The method for reducing oral cavity stimulating substance of a sprouted grain according to claim 20, wherein the resin is at least one resin selected from the group consisting of adsorption resins, ion-exchange resins, gel filtration resins, and affinity chromatography carriers.

22. The method for reducing oral cavity stimulating substance of a sprouted grain according to claim 3, wherein the enzyme is β-glucosidase or β-glycosidase.

23. The method for reducing oral cavity stimulating substance of a sprouted grain according to claim 4, wherein the removal by separation is performed using a separation membrane.

24. The method for reducing oral cavity stimulating substance of a sprouted grain according to claim 23, wherein the separation membrane is a dialysis membrane or critical filtration membrane.

25. The method for reducing oral cavity stimulating substance of a sprouted grain according to claim 4, wherein the removal by separation is performed using cold water.

26. The method for reducing oral cavity stimulating substance of a sprouted grain according to any one of claims 1 through 25, wherein the oral cavity stimulating substance are astringent substances.

27. A method for processing a sprouted grain, comprising a step for reducing the oral cavity stimulating substance of a sprouted grain using one or an arbitrary combination of the reduction methods according to any of claims 1 through 26.

28. A method for processing a sprouted grain, comprising a step for promoting transpiration of moisture and swelling by low-pressure exposure of the a sprouted grain treated using a high-temperature, high-pressure fluid in the reduction method cited in any one of claims 17 through 19.

29. The method for processing a sprouted grain according to claim 28, **characterized in that** an extruder is used.

30. A sprouted grain processed product, which is obtained by the method for processing a sprouted grain according to any one of claims 27 through 29.

31. A food or beverage product produced using the sprouted grain processed product according to claim 30 as a starting material.

32. The food or beverage product according to claim 31, wherein the sprouted grain is malt.
